# EUROPEAN PATENT APPLICATION

(11) **EP 4 407 279 A1**
(43) Date of publication of application: **31.07.2024**
(21) Application number: 23305102.8
(22) Date of filing: 26.01.2023
(51) Int. Cl.: G01F 1/74, G01F 1/76, G01F 5/00, G01F 1/84, G01F 15/00, G01F 15/08

(54) **DEVICE FOR MEASURING A FLOW RATE USING A MASS FLOW METER**

(71) Applicant: GAZTRANSPORT ET TECHNIGAZ, 78470 Saint-Rémy-lès-Chevreuse (FR); Ascenz Solutions Pte. Ltd., Singapour 408868 (SG)
(72) Inventor: DELETRE, Bruno, 78470 SAINT REMY LES CHEVREUSE (FR); GLORY, Julien, 78470 SAINT REMY LES CHEVREUSE (FR); LIM, Serena, 408868 SINGAPOUR (SG); KYAWUNG, Moe, 408868 SINGAPOUR (SG)
(74) Representative: Ex Materia

(57) **Abstract**

The present invention relates to a device 1 for measuring the flow rate of a liquid, comprising at least one main channel 3 intended to be traversed at least by the liquid and a mass flowmeter 5 constituting the main channel 3 and configured to measure the flow rate of liquid circulating within the main channel 3, characterized in that the measuring device 1 comprises at least one bypass channel 7 arranged fluidically in parallel with the mass flowmeter 5 and configured to allow passage of at least one fluid to the gaseous state which enters the measuring device 1. The invention also relates to a measuring method using such a device.

## Description

The present invention relates to the field of filling a liquid storage system, for example a system fitted inside a floating structure.

The invention relates more particularly to the prevention of false fuel flow measurements, in particular in a situation of filling a tank of the floating structure or in a situation of calculating consumption of a consumer on board the floating structure.

Mass flow meters have been widely adopted in the bunkering industry to measure the amount of fuel transferred between a bunkering barge and a floating structure that requires that fuel.

Because mass flow meters measure fluids by mass rather than volume, they provide a more accurate measurement than traditional measurement methods that might use tank gauging or probing. The volume to mass conversion error that is associated with traditional measurement methods is completely avoided through the use of mass flow meters.

In refueling measurement systems installed on board bunker barges or floating reception structures, the mass flow measurement can be disturbed by the presence of air in the fuel which circulates in the pipe carrying the mass flow meter. Such a situation leads to erroneous flow measurements.

The prior art has attempted to resolve this difficulty by implementing a long line that carries the fuel. This solution nevertheless has two major drawbacks.

A first drawback lies in the efficiency of such a system. There are situations where air bubbles remain, which distorts the measurement.

Another drawback lies in the space imposed by the solution of the prior art. Indeed, it is difficult today to have long lengths of tubes, so that the flow rate measurements remain disturbed by the presence of air in the tubes.

The invention provides a new solution which makes the measurement of the mass flowmeter more reliable during the refueling operation of the floating structure.

The object of the invention is therefore a measuring device of the flow rate of a liquid, comprising at least one main channel intended to conduct at least the liquid and a mass flow meter being part of the main channel and configured to measure the flow rate of liquid circulating within the main channel, characterized in that the measuring device comprises at least one bypass channel arranged fluidically in parallel with the mass flowmeter and configured to allow passage of at least one fluid in the gaseous state which enters in the measuring device.

According to an optional characteristic of the invention, the bypass channel is installed vertically above the main channel, i.e., in the opposite direction of gravity. Such a design promotes the rise of the fluid in the gaseous state so that it enters the bypass channel.

According to one aspect of the invention, the bypass channel is configured to have a liquid pressure drop greater than at least ten times the liquid pressure drop of the main channel. This ensures that the liquid preferentially flows through the main channel.

According to another optional characteristic of the invention, the main channel comprises a first end and a second end, the mass flowmeter being fluidically arranged between this first end and this second end, the bypass channel comprising at least one fluidically inlet mouth connected to the first end and a discharge mouth fluidly connected to the second end. The bypass channel may include a single inlet mouth. Alternatively, the bypass may have a plurality of inlet mouths.

According to yet another optional characteristic of the invention, the measuring device comprises a detection member configured to detect the presence of the fluid in the gaseous state in the bypass channel. The detection device is the component capable of determining whether the flow which circulates in the bypass channel is liquid or gaseous, according to a determined threshold of a gaseous presence.

According to an optional characteristic of the invention, the measuring device comprises a control member configured to manage the circulation of the fluid in the gaseous state within the bypass channel. Such a control unit authorizes or prohibits the circulation of the flow within the bypass channel.

According to another optional characteristic of the invention, the control member is placed under dependency of the detection member. It is understood here that the opening or closing of the control member depends on the detection carried out by the detection member.

According to yet another optional characteristic of the invention, the control member is placed under the control of the mass flow meter of the main channel. It is understood here that the opening or closing of the control member depends on a detection operated by the mass flow meter, here the main one. Such detection aims to determine a density of the liquid which circulates in the main channel and to authorize circulation within the bypass channel if the density measured by the mass flow meter is lower than a threshold.

According to an optional characteristic of the invention, the measuring device comprises a management device of the circulation of the liquid within the main channel. Such a member is for example a valve whose opening and/or closing is controlled electrically.

According to this option, the management device of the circulation of the liquid within the main channel is placed under the control of the detection member. It is understood here that the opening or closing of the management device of the circulation of the liquid within the main channel depends on the detection carried out by the detection member.

According to an optional characteristic of the invention, the mass flowmeter of the main channel is a main flowmeter, the measuring device comprising a so-called secondary mass flowmeter configured to measure the flow rate of fluid circulating within the bypass channel. The measuring device then comprises two mass flowmeters, one measuring the fluid flow in the main channel, the other measuring the fluid flow in the bypass channel.

According to another aspect, the management device of the circulation of the liquid within the main channel is placed under the control of the secondary flowmeter. It is understood here that the opening or closing of the management device of the circulation of the liquid within the main channel depends on a detection operated by the secondary flowmeter, here the one that is located within the bypass channel. Such detection aims to determine a density of the liquid which circulates in the bypass channel, and to prohibit circulation within the main channel if the density measured by the secondary flowmeter is below a threshold.

According to another optional characteristic of the invention, the measuring device comprises a phase separation device forming a junction between the main channel and an inlet of the bypass channel, the inlet mouth being fluidly connected to the main channel. The phase separation device is thus arranged upstream of the mass flowmeter, so as to extract the gaseous part of the fluid and guarantee reliable measurement by the mass flowmeter.

According to a first embodiment, the phase separation device comprises a vessel provided with an inlet, a gas outlet and a liquid outlet, the gas outlet being arranged in the upper part of the vessel while the liquid outlet is arranged in the lower part of the vessel, the inlet being arranged vertically between the liquid outlet and the gas outlet.

According to a second embodiment, the phase separation device comprises a plurality of branches arranged between the main channel and the bypass channel, at least two branches extending along a main direction secant with respect to a general direction of the main channel at an angle between 40° and 80°. The multiplicity of branches and their inclination capture the gaseous phase present in the fluid which reaches the mass flowmeter.

According to yet another optional characteristic of the invention, the main direction of at least two branches are parallel to each other.

According to another example, at least two branches are connected to the main channel and separated from each other by a distance of between 100mm and 200mm, measured along the general direction of the main channel. Such an installation guarantees good capture of the gaseous phase, over a length of the main channel upstream of the mass flow meter that is as short as possible.

According to an optional characteristic of the invention, the measuring device comprises a mixer arranged in the main channel, upstream of the mass flowmeter. According to one embodiment, such a mixer is static. Alternatively, the mixer is dynamic. Such a mixer is arranged in the main channel between an inlet of the bypass channel and an inlet of the mass flowmeter which equips the main channel.

According to another optional feature of the invention, the measuring device comprises a static or dynamic mixing device placed in the bypass channel, upstream of the secondary flowmeter.

Such a mixer or such a mixing device plays the role of homogenizing the fluid, by mixing the liquid phase and the gaseous phase as well as possible, so that the measurement of the density of the fluid, whether carried out by the main flowmeter and/or by the secondary flowmeter, is reliable.

The invention also covers a fuel supply system comprising at least one measuring device as described in this document, in which the liquid is a fuel. Such a system can be installed on a dock or on a floating structure, for example a barge.

The invention also covers a floating structure which comprises at least one storage system for a liquid, for example a liquid fuel, the structure comprising at least one measuring device as described in this document.

The invention also relates to a method for measuring a flow rate of liquid using of a measuring device as described in the present document, during which a two-phase liquid/gas mixture is supplied to the measuring device, a fluid the liquid state of the mixture traversing the main channel and at least one fluid in the gaseous state of the mixture traversing the bypass channel, the mass flow meter measuring the flow rate of the fluid in the liquid state which traverses the main channel.

According to an optional characteristic of this method, when the detection member detects the presence of fluid in the gaseous state in the bypass channel, the control member authorizes the circulation of the fluid in the gaseous state within said bypass channel.

The presence of fluid in the gaseous state is defined by a determined threshold, for example a gas/liquid ratio.

According to another optional characteristic of this method, when the mass flowmeter detects a density of the liquid below a threshold, the control member authorizes the circulation of the fluid in the gaseous state within the bypass channel.

According to yet another optional characteristic of this method, when the detection member detects the presence of fluid in the gaseous state in the bypass channel, the member for managing the circulation of the liquid within the main channel prohibits said circulation.

According to an optional feature of this method, when the secondary flowmeter detects a liquid density below a threshold, the management device of the circulation of the liquid within the main channel prohibits said circulation.

According to yet another optional characteristic of this method, during which the secondary flow meter measures the liquid flow rate circulating within the bypass channel, this flow rate being added to the flow rate measured by the main flowmeter.

The final objective of the measuring device according to the invention being to precisely measure the quantity of fuel delivered with a view to invoicing this supply, the double measurement guarantees both the separation of the gaseous phase from the liquid phase, while ensuring the accounting for a liquid part which could pass through the bypass channel, normally dedicated to the passage of the gaseous phase.

Other characteristics and advantages of the invention will become apparent through the description which follows on the one hand, and several embodiments given by way of indication and not limiting with reference to the appended schematic view on the other hand, on which :
[fig 1] is a schematic view of a first embodiment of the measuring device according to the invention,
[fig 2] is a schematic view of a variant of the first embodiment of the measuring device according to the invention,
[fig 3] is a schematic view of a second embodiment of the measuring device according to the invention,
[fig 4] is a schematic view of a first variant of the second embodiment of the measuring device according to the invention,
[fig 5] is a schematic view of a second variant of the second embodiment of the measuring device according to the invention,
[fig 6] is a schematic view of a third variant of the second embodiment of the measuring device according to the invention,
[fig 7] is a schematic view of a third embodiment of the measuring device according to the invention,
[fig 8] is a schematic view of a first variant of the third embodiment of the measuring device according to the invention,
[fig 9] is a schematic view of a second variant of the third embodiment of the measuring device according to the invention,
[fig 10] is a schematic view of a fourth embodiment of the measuring device according to the invention,
[fig 11] is a schematic view of a first variant of the fourth embodiment of the measuring device according to the invention,
[fig 12] is a schematic view of a fifth embodiment of the measuring device according to the invention,
[fig 13] is a schematic view of a first variant of the fifth embodiment of the measuring device according to the invention,
[fig 14] is a schematic view of a sixth embodiment of the measuring device according to the invention,
[fig 15] is a schematic view of a first variant of the sixth embodiment of the measuring device according to the invention,
[fig 16] is a schematic view of a seventh embodiment of the measuring device according to the invention,
[fig 17] is a schematic view of a first variant of the seventh embodiment of the measuring device according to the invention,
[fig 18] is a schematic view of another embodiment of the phase separation device.

In the detailed description to follow, an identical object or characteristic in several embodiments bears the same reference. The notions of upstream or downstream are assessed with regard to the direction of movement of the fluid considered within the pipe considered.

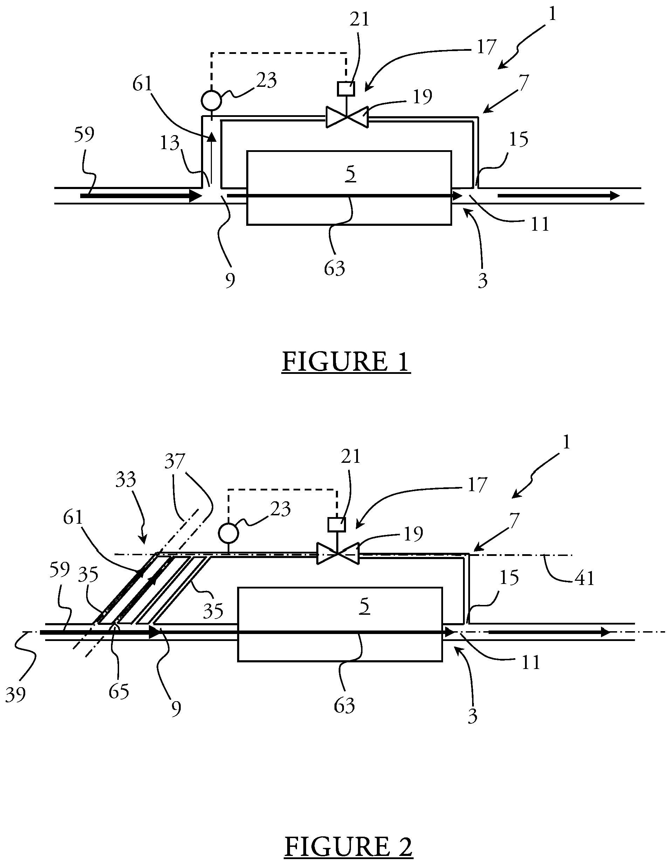

Figures 1 to 17 show an entire device 1 for measuring the flow rate of a liquid, comprising at least one main channel 3 intended to be traversed at least by the liquid and a mass flowmeter 5 part of the main channel 3 and configured to measure the flow of liquid circulating within the main channel 3. According to the invention, the measuring device 1 also comprises at least one bypass channel 7 arranged fluidically in parallel with the mass flowmeter 5 and configured to allow a passage of at least a gaseous fluid.

The mass flowmeter 5 of the embodiments described below is a Coriolis type flowmeter. This mass flowmeter 5 comprises a U-shaped tube without any obstacle in which the fluid flows. The tube is connected to vibration sensors and to vibrating elements, the tube being vibrated at a given frequency. The Coriolis force exerted on the tube by the fluid circulating inside said tube generates a phase shift between the tube and the vibration generated by the vibrating elements. The phase shift thus noted is proportional to the mass flow rate of the fluid circulating in the tube.

The fluid 59 which is delivered to the measuring device 1 is for example a fuel for a floating structure. This fuel is mainly in the liquid state, but there are cases where a fraction of gas, for example air, also circulates with the fuel in the liquid state. The bypass channel 7 of the measuring device is thus provided for the circulation of this fraction of fluid in the gaseous state referenced 61, allowing it to separate from the liquid phase 63 and thus guarantee that the measurement of the mass flowmeter 5 is not disturbed by the presence of this fraction of gas.

In all the embodiments described below, the bypass channel 7 is fluidically parallel to the main channel 3, at least as regards the mass flowmeter 5. It is therefore understood that the fluid which circulates in the bypass channel 7, whatever its state, does not travel on main channel 3.

According to one aspect of the invention, the bypass channel 7 is spatially arranged with respect to the main channel 3 so as to guarantee the extraction of the gaseous phase which flows through the main channel 3. To do this, the bypass channel 7 is for example arranged vertically above the main channel 3. The fluid in the gaseous state thus tends to be collected by the bypass channel 7.

The bypass channel 7 has a liquid pressure drop which is significantly greater than the liquid pressure drop of the main channel 3, for example ten times greater.

The main channel 3 is delimited by a first end 9, by which the fluid enters the main channel 3, and a second end 10 by which the fluid leaves the main channel 3. The mass flowmeter 5 is fluidically arranged between this first end 9 and this second end 11. For its part, the bypass channel 7 comprises at least one inlet mouth 13 fluidically connected to the first end 9 and an outlet mouth 15 fluidically connected to the second end 11.

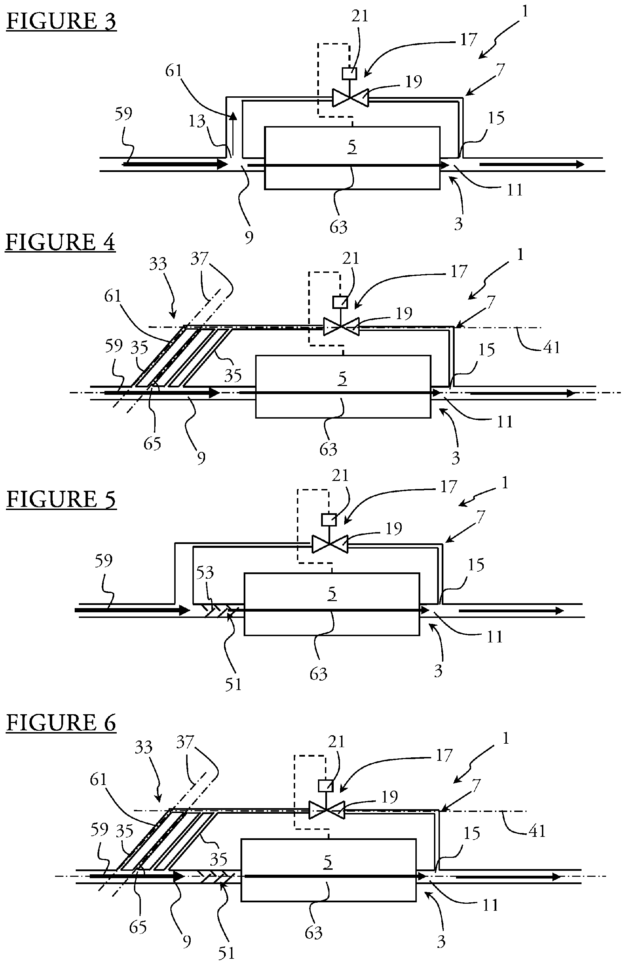

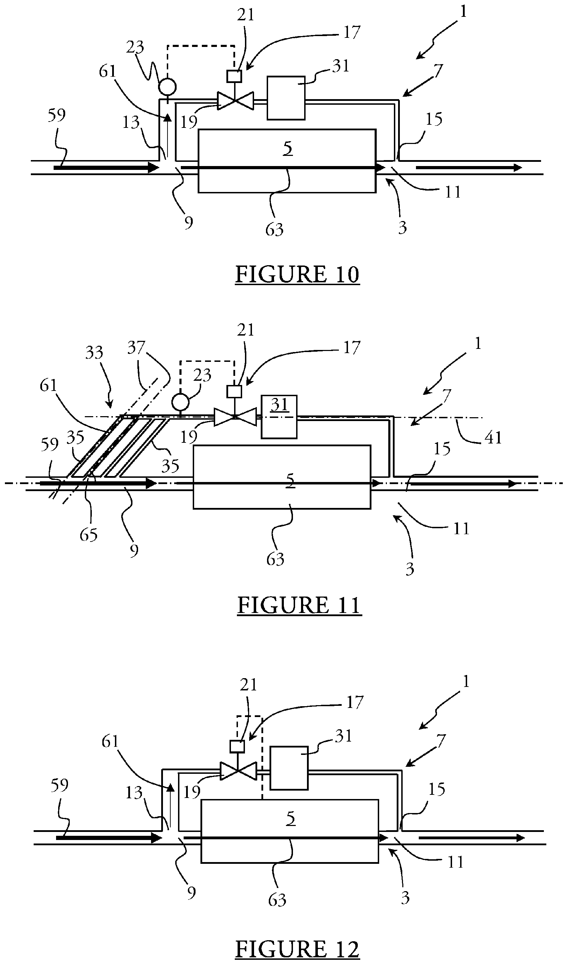

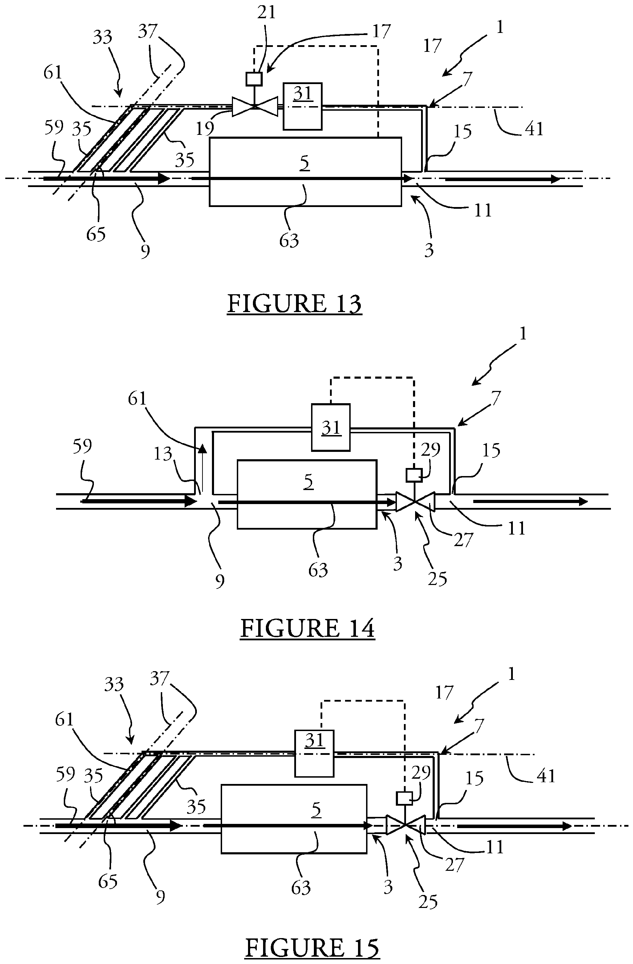

According to the first embodiment illustrated in figures 1 and 2, according to the second embodiment illustrated in figures 3 to 6, according to the fourth embodiment illustrated in figures 10 and 11 and according to the fifth embodiment illustrated in figures 13 and 14, the measuring device 1 comprises a control member 17 whose role is to authorize or prohibit fluid circulation within the bypass channel 7. The control member 17 comprises a valve 19 controlled by an actuating device 21, for example an electromagnet. The control member 17 is for example a controlled butterfly valve. According to the first embodiment and according to the fourth embodiment, the measuring device 1 comprises a detection member 23 whose role is to detect the presence of fluid in the gaseous state or the liquid state in the bypass channel 7. In other words, this detection member 23 is able to determine whether the fluid present in the bypass channel 7 is a gas or a liquid, and thus to communicate an image information of this detection. If this detection shows that the fluid which enters the bypass channel 7 is a fluid in the liquid state, then the control member 17 is placed in the closed position, then prohibiting the circulation of fluid via the bypass channel 7. That is the way the control member 17 is placed under the control of the detection member 23. The presence of liquid in the bypass channel is the guarantee that the main channel 3 is completely filled with a liquid phase of the fluid which enters the measuring device 1 according to the invention.

The detection member 23 is arranged in the measuring device 1 according to the invention so as to discriminate gas or liquid upstream of the control member 17. The detection member 23 therefore takes its measurement between the mouth 13 of the bypass channel 7 and an inlet of the control unit 17.

According to the second embodiment illustrated in figures 3 to 6 and according to the fifth embodiment illustrated in figures 12 and 13, the control member 17 described above is controlled by the mass flowmeter 5 which is installed within the main channel 3. The mass flowmeter 5 is able to determine the density of the fluid passing through it. It is thus possible to know whether the fluid mainly consists of a liquid phase or a gaseous phase. In the case where the density of the fluid which passes through the mass flowmeter 5 is less than a determined threshold, it is considered that the quantity of gas which circulates in the main channel 3 is too high and that the flow measurement by the mass flowmeter is no more reliable.

In such a situation, the control member 17 is placed in the open position so as to allow circulation of the gaseous phase within the bypass channel 7, which leads to an increase of the liquid phase within the main channel 3. On the other hand, in the case where the density of the fluid which passes through the mass flowmeter 5 is greater than the determined threshold, the control member 17 is placed in the closed position so as to prevent the circulation of fluid within the bypass channel 7. That is the way the control member 17 is placed under the control of the mass flowmeter 5 constituting the main channel 3.

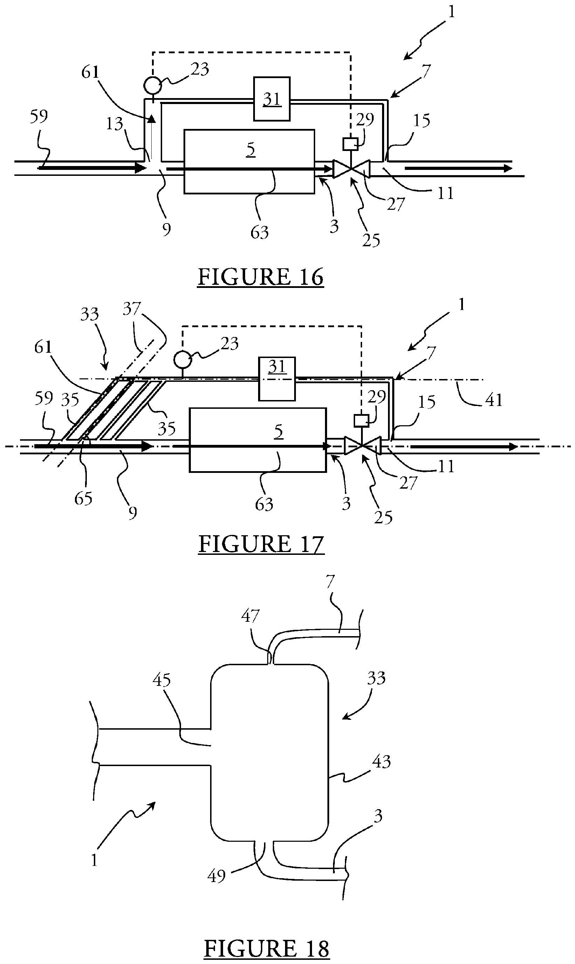

According to the sixth embodiment illustrated in figures 14 and 15 and according to the seventh embodiment shown in figures 16 and 17, the measuring device 1 comprises a management device 25 which authorizes or prohibits a circulation of fluid within the main channel 3. The management device 25 comprises a valve 27 controlled by an actuating device 29, for example an electromagnet. Such a management device 25 is installed on the main channel 3 between an outlet of the mass flowmeter 5 and the second end 11 of the main channel 3. The management device 25 is for example a controlled butterfly valve.

According to the seventh embodiment illustrated in figures 16 and 17, the measuring device 1 comprises the detection member 23 as described above, for example in figure 1. The management device 25 of the circulation of the liquid within the main channel 3 is thus placed under the control of the detection member 23. In the case where the detection member 23 detects a major presence of a liquid phase in the bypass channel 7, the management device 25 allows fluid circulation within the main channel 3. It is thus considered that if the detection member 23 detects the presence of liquid, it means that the main channel 3 is filled with liquid. The measurement operated by the mass flowmeter 5 is then reliable, in that it is not disturbed by the presence of gas.

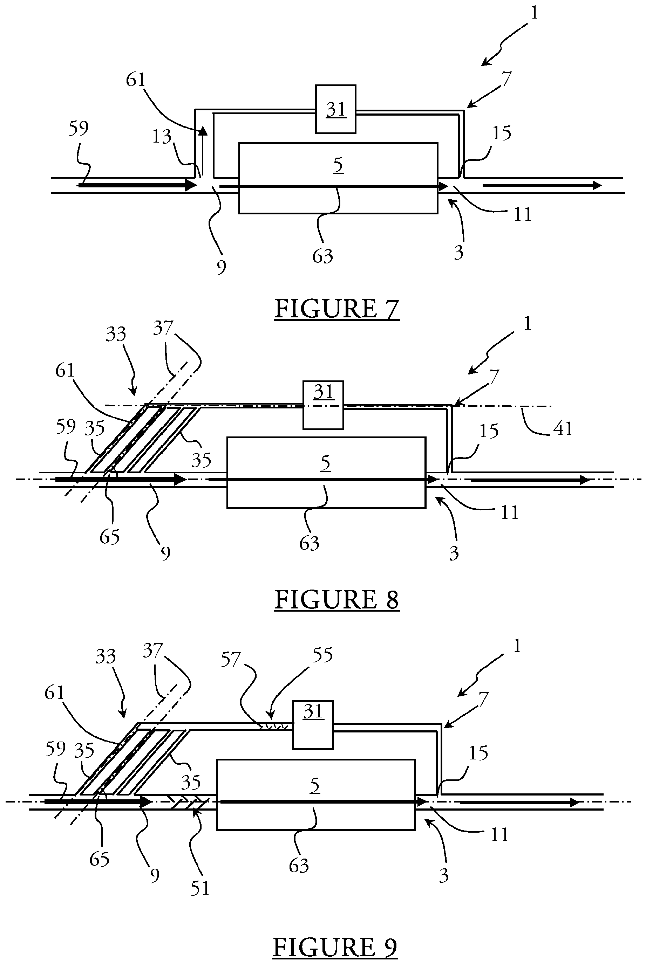

According to the third to seventh embodiments illustrated in figures 7 to 17, the measuring device 1 comprises an additional mass flowmeter, that is to say in addition to the mass flowmeter 5 installed on the main channel 3. The measuring device 1 thus comprises the mass flowmeter 5 constituting the main channel 3 which will be called in the remainder of the description "main flowmeter", the measuring device 1 comprising a so-called "secondary" mass flowmeter referenced 31 and configured to measure the fluid flow circulating within the bypass channel 7.

This secondary flowmeter 31 is a Coriolis effect mass flowmeter.

The secondary flowmeter 31 is placed between the inlet mouth 13 of the bypass channel 7 and the outlet mouth 15 of this same channel.

The secondary flowmeter 31 measures the flow rate of fluid in the liquid state which circulates within the bypass channel 7, such a secondary measurement being added to the main measurement carried out by the main flowmeter 5, to determine the total quantity of fuel delivered to the floating structure.

In the case where the density of the fluid present in the bypass channel 7 is less than a threshold, it is considered that the quantity of fluid in the gaseous state is too high and that this risks to disturb the measurement carried out by the secondary flowmeter 31. In such a case, only the measurement taken by the main flowmeter 5 is used to determine the total quantity of fuel delivered to the floating structure.

According to the sixth embodiment illustrated in figure 14 and 15, the secondary flow meter 31, in addition to its measurement function as described above, is also configured to directly or indirectly control the management device 25 of the liquid circulation within the main channel 3.

In the case where the density of the fluid present in the bypass channel 7 is lower than said threshold, it is considered that there is a risk of the presence of gas in the fluid which circulates in the main channel 3 likely to disturb the measurement of the main flowmeter 5. In such a case, the secondary flowmeter 31 orders the closure of the management device 25, then prohibiting any circulation of fluid within the measuring device 1. In the opposite case where the density of fluid measured by the flowmeter secondary 31 is higher than said threshold, the management device 25 is then open and allows the circulation of the fluid within the main channel 3.

The measuring device 1 according to the invention may comprise a phase separation device 33 forming a junction between the main channel 3 and an inlet mouth 13 of the bypass channel 7. The role of this phase separation device 33 is to maximize the presence of fluid in the liquid state in the main channel 3, by sending the gaseous phase possibly present in the fluid into the bypass channel 7.

Such a phase separation device 33 is therefore installed upstream of the mass flowmeter 5 which forms part of the main channel 3 and upstream of all the elements or components which equip the bypass channel 7, being for example directly upstream of the detection member 23 for the variants of figures 2, 11 and 17, of the control member 17 for the variants of figures 4, 6 and 13, of the secondary flowmeter 31 for the variants of figures 8 and 15.

Such a phase separation device 33 may be part of each of the embodiments contained herein. This phase separation device 33 is illustrated according to a first exemplary embodiment in figures 2, 4, 6, 8, 9, 11, 13, 15 and 17 and the detailed description below of this first exemplary embodiment of this device phase separation 33 is considered to be included in each of these embodiments, in particular in each of the figures listed above.

The first embodiment of the phase separation device 33 comprises a plurality of branches 35 arranged between the main channel 3 and the bypass channel 7, at least two branches 35 extending along a main direction 37 secant with respect to a general direction 39 of the main channel 3 at an angle 65 between 40° and 80°.

At least one of the branches 35 connects to the bypass channel 7 in such a way as to form an angle complementary to the angle 65 between the main direction 37 of the branch and an axis of extension 41 of the bypass channel 7.

The distance which separates two branches 35 measured at the level of their junction with the main channel 7 is chosen so as to favor the extraction of any bubble or gaseous phase present in the fluid which enters the measuring device 1. According to an example, this capture is optimized when this distance is between 100mm and 200mm, measured along the general direction 39 of the main channel 3. Advantageously, this distance is equal to 150mm +/-5%.

Note that the main direction 37 of at least two branches are parallel to each other. In the present case, the phase separation device 33 comprises four branches 35, but such a number is not limiting.

Figure 18 shows a second exemplary embodiment of this phase separation device 35. It is important to note that this second exemplary embodiment can be installed instead of the first exemplary embodiment of the phase separation device 35 such as described in figures 2, 4, 6, 8, 9, 11, 13, 15 and 17. The description below of this second embodiment is therefore considered to be incorporated into any of the embodiments of the measuring device according to the invention, and in particular in each of the figures listed above.

The phase separation device 35 according to the second exemplary embodiment illustrated in figure 18 comprises at least one vessel 43 provided with an inlet 45, a gas outlet 47 and a liquid outlet 49. The gas outlet 47 being arranged in the upper part of the vessel 43 so as to extract the gaseous phase possibly present in the fluid which enters the vessel 43 through the inlet 45. Such a gas outlet 47 is fluidically connected to the bypass 3 and feeds the latter.

The liquid outlet 49 is arranged in the lower part of the tank 43 so as to guarantee the supply of a liquid phase to the main channel 3, the latter being fluidly connected to the liquid outlet 49.

Concerning the fluid inlet 45, it is geometrically arranged vertically between the liquid outlet 49 and the gas outlet 47 and it is through this inlet 45 that possibly diphasic fluid enters the measuring device 1 according to the invention.

The measuring device 1 according to the invention may comprise a mixer 51 arranged in the main channel 3, upstream of the mass flowmeter 5. The role of such a mixer 51 is to homogenize the fluid which enters the mass flowmeter 5. This avoids the presence of large gas bubbles which can disturb the measurement performed by the mass flowmeter 5. The mixer 51 breaks up these large bubbles and thus homogenizes the fluid. The mixer is a static mixer when it comprises fins 53 which are integral with the duct which forms the main channel 3, being attached with respect to this duct.

Alternatively or additionally, the mixer 51 can be a dynamic mixer in the sense that it comprises moving components which mix the liquid phase and the gaseous phase, so as to form a homogeneous fluid.

Whatever its embodiment, such a mixer 51 is installed directly upstream of the mass flowmeter 5 which is part of the main channel 3.

Such a mixer 51 may be part of each of the embodiments contained herein. This mixer 51 is illustrated in figures 5, 6, 9, but it is understood that such a mixer 51 can be installed in each of the other figures, as long as it is arranged upstream of the mass flowmeter 5. The description detailed above of this mixer 51 is therefore considered to be included in each of the embodiments of the measuring device 1.

The measuring device 1 according to the invention may comprise a mixing device 55 arranged in the bypass channel 7, upstream of the secondary flowmeter 31, when the measuring device 1 is provided with it, as it is the case in the embodiment of figure 9. The role of such a mixing device 55 is to homogenize the fluid which enters the secondary flowmeter 31. This avoids the presence of gas bubbles which can disturb the measurement carried out by the secondary flowmeter 31. The mixing device mixture 55 breaks these large bubbles and thus homogenizes the fluid. The mixing device 55 is qualified as static because it comprises obstacles 57 which are integral with the duct which forms the bypass channel 7, being fixed with respect to this duct. The mixing device 55 is dynamic when it comprises moving elements which break the gas bubbles and homogenize the fluid.

Such a mixing device 55 is installed directly upstream of the secondary flowmeter 31 which is part of the bypass channel 7.

A mixing member 55 may be part of each of the embodiments contained herein that operates a secondary flow meter. This mixing device 55 is illustrated in figure 9, but it is understood that such a mixing device 55 may be part of the variant illustrated in each of the other figures, as long as it is arranged upstream of the secondary flowmeter 31. The detailed description above of this mixing device 55 is therefore considered to be included in each of the embodiments of the measuring device 1, in particular in figures 11, 13, 15 and 17.

The invention also relates to a method for measuring the flow rate of a liquid. Such a method makes use of a measuring device 1 such as has just been detailed. It is noted that the method can be implemented with any one of the seven embodiments, in particular with any one of the variants of these embodiments.

The fluid which enters the measuring device 1 may be a two-phase mixture which comprises a liquid phase and a gaseous phase. Thanks to the measuring device 1, the liquid phase travels the main channel 3 and the gaseous phase can travel the bypass channel 7. Of course, when the fluid which enters the measuring device 1 is entirely liquid, the measuring device 1 is configured so that liquid also travels through the bypass channel 3.

Whatever the situation is, the mass flowmeter 5 measures the flow rate of the fluid in the liquid state which traverses the main channel 3 and this measurement is used to calculate the volume of fluid to be invoiced, for example.

When the measuring device comprises a control member 17 and a detection member 23 as is the case with the first embodiment illustrated in figures 1 and 2 and the fourth embodiment illustrated in figures 10 and 11, the method implements a step where the detection member 23 detects the presence of fluid in the gaseous state in the bypass channel 7 and a step during which the control member 17 authorizes the circulation of the fluid in the gaseous state within said bypass channel 7, the control member 17 being placed in an open position.

According to a step of the method during which the mass flowmeter 5 detects a density of the liquid below a threshold, the method then provides for a step where the control member 17 authorizes the circulation of the fluid in the gaseous state within the bypass channel 7.

When the measuring device comprises a detection member 23 and a management device 25 of the circulation of the liquid within the main channel 3 as is the case of the seventh embodiment illustrated in figures 16 and 17, the method implements a step during which the detection member 23 detects the presence of fluid in the gaseous state in the bypass channel 7, and a subsequent step where the management device 25 of the circulation of the liquid within the main channel 3 prohibits said circulation due to the detection operated by the detection member 23.

When the measuring device comprises a main flowmeter 5 being part of the main channel 3, a secondary flow meter 31 constituting the bypass channel 7 and a management device 25 of the circulation of the liquid within the main channel 3 as is the case of the sixth embodiment illustrated in figures 14 and 15, the method implements a step during which the secondary flowmeter 31 detects that a density of the liquid is lower than a determined threshold, the method implementing a step of control of the management device 25 so that it blocks the circulation of the liquid within the main channel 3.

In cases where the measuring device is provided with the secondary flowmeter 31, the method provides for a step during which a liquid flow rate measured by the secondary flow meter 31 is added with a liquid flow rate measured by the main flowmeter 5.

Of course, the invention is not limited to the examples which have just been described and many adjustments can be made to these examples without departing from the scope of the invention.

The invention, as it has just been described, achieves the goal it had set itself, and makes it possible to propose a system which extracts the gaseous phase present in a fluid and which makes it possible to measure exclusively the liquid phase, thus avoiding the negative effects that this gas phase can have on the measurement made by the mass flowmeter. Variants not described here could be implemented without departing from the context of the invention, provided that, in accordance with the invention, they comprise a measuring device in accordance with the invention, whatever its embodiment, or its variant.

## Claims

1. Measuring device (1) of the flow rate of a liquid, comprising at least one main channel (3) intended to conduct at least the liquid and a mass flow meter (5) being part of the main channel (3) and configured to measure the flow rate of liquid circulating within the main channel (3), **characterized in that** the measuring device (1) comprises at least one bypass channel (7) arranged fluidically in parallel with the mass flow meter (5) and configured to allow a passage of at least one fluid in the gaseous state which enters the measuring device (1).

2. Measuring device (1) according to claim 1, comprising a detection member (23) configured to detect the presence of the fluid in the gaseous state in the bypass channel (7).

3. Measuring device (1) according to any one of claims 1 to 2, comprising a control member (17) configured to manage the circulation of the fluid in the gaseous state within the bypass channel (7).

4. Measuring device (1) according to claims 2 and 3, in which the control member (17) is placed under the control of the detection member (23).

5. Measuring device (1) according to claim 3, in which the control member (17) is placed under the control of the mass flow meter (5) being part of the main channel (3).

6. Measuring device (1) according to any one of claims 1 to 5, comprising a management device (25) of the circulation of the liquid within the main channel (3).

7. Measuring device (1) according to claims 2 and 6, in which the management device (25) of the circulation of the liquid within the main channel (3) is placed under the control of the detection member (23).

8. Measuring device (1) according to any one of claims 1 to 7, in which the mass flowmeter (5) constituting the main channel (3) is a main flowmeter (5), the measuring device (1) comprising a so-called secondary mass flowmeter (31) configured to measure the flow rate of fluid circulating within the bypass channel (7).

9. Measuring device (1) according to claim 8 in combination with claims 6 or 7, in which the management device (25) of the circulation of the liquid within the main channel (3) is placed under the control of the secondary flow meter (31).

10. Measuring device (1) according to any one of claims 1 to 9, comprising a phase separation device (33) forming a junction between the main channel (3) and an inlet mouth (13) of the bypass channel (7), the inlet mouth (13) being fluidly connected to the main channel (3).

11. Measuring device (1) according to claim 10, in which the phase separation device (33) comprises a vessel (43) provided with an inlet (45), a gas outlet (47) and a liquid outlet (49), the gas outlet (47) being arranged in the upper part of the vessel (43) while the liquid outlet (49) is arranged in the lower part of the vessel (43), the inlet (45) being arranged vertically between the liquid outlet (49) and the gas outlet (47).

12. Measuring device (1) according to claim 10, in which the phase separation device (33) comprises a plurality of branches (35) arranged between the main channel (3) and the bypass channel (7), at least two branches (35) extending along a main direction (37) secant with respect to a general direction (39) of the main channel (3) at an angle (65) between 40° and 80°.

13. Measuring device (1) according to any one of claims 1 to 12, comprising a mixer (51) arranged in the main channel (3), upstream of the mass flowmeter (5).

14. Measuring device (1) according to any one of claims 1 to 13 in combination with claim 8, comprising a mixing device (55) arranged in the bypass channel (7), upstream of the secondary flowmeter (31).

15. Fuel supply system comprising at least one measuring device (1) according to any one of claims 1 to 14, wherein the liquid is a fuel.

16. Floating structure comprising at least one liquid storage system and at least one measuring device (1) according to any one of claims 1 to 14.

17. Method for measuring a flow rate of liquid by using of a measuring device (1) according to any one of claims 1 to 14, during which a two-phase liquid/gas mixture is supplied to the measuring device (1), a fluid in the liquid state of the mixture traversing the main channel (3) and a fluid at least in the gaseous state of the mixture traversing the bypass channel (7), the mass flowmeter (5) measuring the flow rate of the fluid in the liquid state that travels the main channel (3).

18. Measuring method according to claim 17 in combination with claims 2 and 3, during which, when the detection member (23) detects the presence of fluid in the gaseous state in the bypass channel (7), the control member (17) authorizes the circulation of the fluid in the gaseous state within said bypass channel (7).

19. Measuring method according to claim 17 in combination with claim 3, during which, when the mass flowmeter (5) detects a density of the liquid below a threshold, the control member (17) authorizes the circulation of the fluid at the gaseous state within the bypass channel (7).

20. Measuring method according to claim 17 in combination with claim 7, during which, when the detection member (23) detects the presence of fluid in the gaseous state in the bypass channel (7), the management device (25) of the circulation of the liquid within the main channel (3) prohibits said circulation.
